# FASCICULE DE BREVET EUROPEEN

(11) **EP 3 512 743 B1**
(45) Date de publication et mention de la délivrance du brevet: **08.09.2021**
(21) Numéro de dépôt: 17751641.6
(22) Date de dépôt: 19.07.2017
(51) Int. Cl.: B60S 1/40, B60S 1/38

(54) **ADAPTATEUR POUR LA CONNEXION D'UN BALAI D'ESSUYAGE A UN BRAS D'ENTRAINEMENT D'UN SYSTEME D'ESSUYAGE POUR VEHICULE AUTOMOBILE**
ADAPTER ZUM VERBINDEN EINES WISCHERS MIT EINEM ANTRIEBSARM EINES KRAFTFAHRZEUGWISCHERSYSTEMS
ADAPTER FOR CONNECTING A WIPER TO A DRIVE ARM OF A MOTOR VEHICLE WIPER SYSTEM

(30) Priorité: 14.09.2016 FR 1658577
(43) Date de publication de la demande: 24.07.2019
(73) Titulaire: Valeo Systèmes d'Essuyage, 78322 Le Mesnil Saint Denis (FR)
(72) Inventeur: GAUCHER, Vincent, 63500 Issoire (FR); HOUSSAT, Stéphane, 63500 Issoire (FR); JOMARD, Olivier, 63500 Issoire (FR)
(74) Mandataire: Valeo Visibility
(86) Numéro de dépôt international: PCT/EP2017/068179
(87) Numéro de publication internationale: WO 2018/050325

(56) Documents cités:
- WO-A1-2017/136845
- DE-A1- 10 130 903
- DE-A1- 10 257 988
- DE-A1-102011 001 688
- DE-A1-102012 100 779
- US-A1- 2015 151 718
- US-A1- 2016 001 745
- US-A1- 2016 107 616

## Description

L'invention se rapporte au domaine de l'essuyage et/ou du nettoyage des surfaces vitrées d'un véhicule automobile, et elle concerne plus particulièrement un dispositif de connexion entre un balai d'essuie-glace et un bras d'entraînement de celui-ci.

Les essuie-glaces pour véhicules automobiles sont conçus pour retirer, par balayage, les liquides et salissures qui peuvent perturber la vision que le conducteur a de son environnement. Ces essuie-glaces comprennent généralement au moins un bras d'entraînement qui effectue un mouvement de va-et-vient angulaire contre une surface vitrée du véhicule, et au moins un balai d'essuyage équipé d'une lame racleuse réalisée dans un matériau élastique. En frottant contre cette surface vitrée, cette lame en balaie l'eau et un certain nombre de salissures, et les évacue en dehors du champ de vision du conducteur.

Quelle que soit la configuration du balai d'essuie-glace (étriers articulés qui retiennent la lame racleuse en plusieurs zones distinctes, ou lame métallique qui maintient la lame racleuse sur toute sa longueur, par exemple), celui-ci est rattaché au bras d'entraînement du système d'essuyage par un ensemble de connexion qui comprend généralement au moins un connecteur et un adaptateur. Le connecteur est solidarisé au balai, et l'adaptateur est une pièce qui est configurée, d'une part, pour coopérer avec le connecteur et, d'autre part, pour être engagée avec une partie terminale, ou chape, du bras d'entraînement. Connecteur et adaptateur coopèrent pour réaliser la fixation du balai sur le bras d'entraînement et la liaison articulée entre ces deux ensembles.

Dans le marché de la vente de pièces et d'accessoires pour la seconde monte des véhicules automobiles, il est connu de proposer un même balai, vendu équipé de son propre connecteur, adaptable pour plusieurs types de bras d'entraînement. Il convient donc de concevoir un adaptateur utilisable avec le plus grand nombre possible de types de chapes de bras et avec le plus grand nombre possible de types de connecteurs de balais, puisque c'est l'adaptateur qui forme l'interface entre ces deux éléments.

La présente invention a pour but de proposer une solution permettant de réaliser la connexion d'un balai d'essuyage à un type particulier de chape de bras d'entraînement pour un système d'essuyage d'un véhicule automobile, chape qui présente, perpendiculairement à sa direction longitudinale d'extension, une section en forme de "U" renversé dont les branches verticales sont constituées par deux parois latérales de cette chape et dont la branche transversale est formée par une paroi supérieure de ladite chape. Paroi supérieure et parois latérales de cette chape délimitent ainsi entre elles un volume d'accueil de l'adaptateur selon l'invention.

La chape particulière à laquelle l'invention s'applique plus précisément comporte également deux ouïes agencées chacune longitudinalement sur l'une de ses parois latérales de la chape à partir d'un bord d'extrémité avant libre de cette paroi latérale, extrémité avant libre qui constitue l'extrémité par laquelle l'adaptateur de l'invention est introduit dans cette chape. Ces ouïes peuvent avantageusement participer à la liaison entre adaptateur et bras d'entraînement. Toutefois, les contraintes mécaniques de fabrication du bras d'entraînement et, notamment, de sa chape, font que les tolérances dimensionnelles de ces ouïes sont peu précises, et que les adaptateurs en général disponibles sur le marché de l'après-vente de pièces détachées et d'accessoires pour systèmes d'essuyage ne permettent pas toujours d'assurer de manière fiable une telle liaison. Dans certains cas, l'adaptateur ne peut pas être monté sur la chape en raison de ces écarts de tolérance. US-A-2015/0151718 montre le préambule de la revendication 1.

L'invention a pour but de proposer un adaptateur qui permette de réaliser une utilisation efficace de ces ouïes pour un centrage de cet adaptateur 100 avec le bras d'entraînement, notamment quelle que soit la tolérance dimensionnelle des ouïes, un tel centrage intervenant selon une direction verticale.

Pour atteindre le but qu'elle s'est fixé, l'invention propose un adaptateur qui comporte un corps et une tête qui s'étendent dans le prolongement l'un de l'autre selon une direction longitudinale, et dont chacun comporte une paroi supérieure à partir de laquelle s'étendent, sensiblement perpendiculairement à cette paroi, deux flancs latéraux.

Par convention, dans tout le présent document, le qualificatif "longitudinal" s'applique à la direction dans laquelle s'étendent la tête et le corps de l'adaptateur selon l'invention dans le prolongement l'un de l'autre, le qualificatif "transversal" s'applique à une direction sensiblement perpendiculaire à la direction longitudinale et joignant entre eux les flancs latéraux de l'adaptateur selon l'invention, et le qualificatif "vertical" désigne la direction perpendiculaire à la fois à la direction longitudinale et à la direction transversale, c'est-à-dire perpendiculaire à la paroi supérieure de l'adaptateur.

Dans un système d'essuyage comportant un balai d'essuyage équipé de son connecteur et assemblé, au moyen d'un adaptateur selon l'invention, avec une chape d'un bras d'entraînement dudit système d'essuyage, les qualificatifs "inférieur" ou "bas" désignent plus précisément les régions plus proches de la surface à essuyer selon la direction verticale, et les qualificatifs "supérieur" ou "haut" désignent les régions qui s'éloignent ce cette dernière, selon cette même direction verticale.

En référence à ces différentes directions, tête et corps de l'adaptateur selon l'invention présentent ainsi chacun, selon un plan transversal vertical, une section dont la forme est sensiblement celle d'un "U" renversé formé de leur paroi supérieure à partir de laquelle s'étendent, perpendiculairement ou sensiblement perpendiculairement, les deux flancs latéraux, verticaux ou sensiblement verticaux, de cette tête et/ou de ce corps. Paroi supérieure et flancs latéraux de la tête et du corps de l'adaptateur selon l'invention délimitent ensemble un volume interne de celui-ci.

Selon l'une de ses caractéristiques principales, l'adaptateur selon l'invention comporte un moyen de centrage destiné à coopérer avec le bras d'entraînement, notamment avec au moins l'une des ouïes agencées dans l'une au moins des parois latérales d'une chape du type précédemment défini. Ce centrage est réalisé selon une direction perpendiculaire à un plan par lequel une paroi supérieure de l'adaptateur passe.

Selon l'invention, ce moyen de centrage est agencé sur l'un au moins des flancs latéraux de l'adaptateur, plus précisément sur l'un des flancs latéraux de la tête de cet adaptateur. Ce moyen de centrage assure également un blocage de l'adaptateur dans la chape selon cette même direction perpendiculaire à la paroi supérieure. En ce sens, le moyen de centrage peut également être qualifié de moyen de blocage de l'adaptateur dans le bras d'entraînement, selon la direction précitée.

Chaque flanc latéral de la tête porte un moyen de centrage, notamment un unique moyen de centrage par flanc latéral.

L'interface entre le corps et la tête de l'adaptateur selon l'invention forme un épaulement dont les dimensions sont définies pour être sensiblement égales à l'épaisseur des parois latérales de la chape du bras d'entraînement avec laquelle l'adaptateur est destiné à coopérer. Selon un mode de réalisation de l'invention, cet épaulement s'étend entre les parois supérieures respectivement de la tête et du corps de l'adaptateur, formant ainsi un rebord périphérique à l'interface entre cette tête et ce corps.

Si l'on définit la dimension transversale de la tête ou du corps de l'adaptateur selon l'invention comme la distance, selon un plan sensiblement parallèle au plan de la paroi supérieure de cette tête ou de ce corps, mesurée entre des surfaces de ces flancs latéraux situées à l'extérieur du volume interne de l'adaptateur, la dimension transversale de la tête de l'adaptateur selon l'invention est supérieure à la dimension transversale du corps de l'adaptateur selon l'invention. De même, si l'on définit la hauteur de la tête ou du corps de l'adaptateur selon l'invention comme la dimension, mesurée selon un plan sensiblement parallèle à celui des flancs latéraux de cette tête ou de ce corps, entre la surface de la paroi supérieure située à l'extérieur du volume interne de l'adaptateur et le bord inférieur des flancs latéraux, la hauteur de la tête de l'adaptateur selon l'invention est supérieure à la hauteur de son corps. En d'autres termes, la tête est plus haute et/ou plus large que le corps de l'adaptateur de l'invention.

Selon l'invention, le moyen de centrage est agencé à partir de l'épaulement ménagé à l'interface entre les flancs latéraux de la tête et du corps de l'adaptateur, notamment en étant issu de celui-ci.

Ce moyen de centrage s'étend longitudinalement, à partir du flanc latéral qui le porte, au-delà de cet épaulement, en direction du corps de l'adaptateur selon l'invention.

Le moyen de centrage s'étend transversalement du flanc latéral du corps adjacent au flanc latéral de la tête dont il est issu.

Selon l'invention, ce moyen de centrage présente, selon sa direction longitudinale d'extension, une forme courbée dont le sommet de la courbure est orienté vers le corps de l'adaptateur.

Selon l'invention, ce moyen de centrage se présente ainsi sous la forme d'une portion de disque, par exemple centrée sur le flanc latéral de la tête de l'adaptateur qui le porte. Une telle portion de disque est ainsi délimitée par une face alignée avec une face extérieure délimitant le flanc latéral de la tête.

Avantageusement, la dimension transversale de ce moyen de centrage, c'est-à-dire son épaisseur qui déborde transversalement du corps de l'adaptateur selon l'invention, est identique ou sensiblement identique à la dimension transversale de l'épaulement formant l'interface entre un flanc latéral de la tête et un flanc latéral du corps. Ainsi, ce moyen de centrage ne constitue pas une partie saillante à la surface extérieure, opposée au volume interne défini précédemment, du flanc latéral qui le porte.

L'adaptateur selon l'invention comporte également avantageusement, dans la région de son corps, un moyen permettant sa liaison en rotation avec un connecteur d'un système d'essuyage. Selon un exemple de réalisation, ce moyen de liaison en rotation est constitué d'au moins un toron cylindrique centré sur un axe de rotation sensiblement transversal, parallèle à la paroi supérieure du corps et sensiblement perpendiculaire aux flancs latéraux de celui-ci. Ce moyen de liaison en rotation peut comprendre deux torons cylindriques coaxiaux.

Avantageusement, ce toron sensiblement cylindrique s'étend à partir au moins d'un flanc latéral du corps l'adaptateur selon l'invention, au sein de la partie du volume interne dudit adaptateur délimitée par la paroi supérieure et par les flancs verticaux de ce corps, à proximité de l'interface entre tête et corps de cet adaptateur. Ce toron est avantageusement destiné à coopérer avec un connecteur associé à un balai d'essuyage lors de la connexion d'un tel balai avec l'adaptateur selon l'invention. Plus précisément, ce toron est destiné à être engagé dans un orifice d'accueil agencé dans un tel connecteur.

Selon une variante de réalisation, le moyen de liaison en rotation est constitué d'au moins deux ouvertures, cylindriques de section circulaire ou carré, agencé dans chaque flanc latéral du corps de l'adaptateur. Ces ouvertures coopèrent avec un connecteur associé à un balai d'essuyage lors de la connexion d'un tel balai avec l'adaptateur selon l'invention. Plus précisément, ces ouvertures sont destinées à être engagées chacune sur un toron issu de matière avec le connecteur, ou sur un arbre rapporté sur le connecteur.

Selon encore une autre réalisation, le moyen de liaison en rotation comprend d'un côté un unique toron ménagé dans une des flancs latéraux du corps et un une unique ouverture ménagée dans l'autre flanc latéral du corps.

Selon les variantes de réalisation évoquées ci-dessus, les dimensions du moyen de centrage sont avantageusement définies pour que celui-ci n'obture pas cette ouverture s'il est agencé sur le même côté de l'adaptateur.

Ce mode de réalisation n'est toutefois pas exclusif, et tout moyen permettant d'établir une liaison en rotation entre l'adaptateur selon l'invention et un connecteur d'un balai d'essuyage peut être mis en œuvre sans que cela nuise à l'invention.

L'adaptateur selon l'invention peut être perfectionné par la présence d'une joue issue de la tête, qui s'étend longitudinalement le long du corps et transversalement à distance de celui-ci. Une telle distance peut par exemple être égale à une épaisseur de la paroi formant la chape.

Selon une variante de réalisation, le moyen de centrage décrit ci-dessus peut être associé à un ergot cylindrique, ou sensiblement cylindrique, agencé sur le flanc latéral correspondant du corps de l'adaptateur selon l'invention. Dans ce cas, la forme et/ou les dimensions et/ou l'agencement d'un tel ergot sont avantageusement définis de telle manière que, lors de l'engagement de l'adaptateur selon l'invention dans le volume d'accueil délimité par les parois supérieure et latérales de la chape avec laquelle cet adaptateur est destiné à coopérer, cet ergot s'engage dans l'ouïe agencée dans la paroi latérale correspondante. On assure ainsi un guidage selon en longitudinal de l'adaptateur dans la chape.

Lorsque l'adaptateur selon l'invention est assemblé avec un bras d'entraînement dont la chape est du type décrit précédemment, le corps de cet adaptateur est engagé dans le volume d'accueil de cette chape. Dans ce mouvement, la paroi supérieure de ce corps vient en appui, au sein de ce volume d'accueil, contre la paroi supérieure de la chape, et les parois latérales de celle-ci agissent avantageusement à la fois comme moyen de guidage longitudinal et transversal et comme moyen de blocage transversal de l'adaptateur 100 au sein de ce volume d'accueil. Pour ce faire, les dimensions extérieures, notamment, du corps de l'adaptateur selon l'invention, sont avantageusement définies pour permettre ce guidage et ce blocage : en d'autres termes, les dimensions extérieures du corps de l'adaptateur selon l'invention sont avantageusement définies pour permettre une insertion aisée mais ajustée, c'est-à-dire sans jeu excessif, de celui-ci au sein du volume d'accueil délimité par la paroi supérieure et par les parois latérales de la chape du bras d'entraînement avec laquelle cet adaptateur est destiné à coopérer. Avantageusement, les dimensions du moyen de centrage et sa configuration sur le flanc latéral qui le porte sont définies de telle manière que, lorsque le corps de l'adaptateur selon l'invention est reçu dans le volume d'accueil de la chape, ce moyen de centrage obture au moins partiellement l'ouverture débouchante, de l'ouïe agencée sur la paroi latérale correspondante de cette chape, à l'extrémité libre de cette chape.

Dans cet assemblage, le moyen de centrage vient se placer en appui contre les bords libres de l'ouverture débouchante d'une telle ouïe. On comprend aisément alors que, en fonction de la dimension et de la configuration exacte de cette ouïe, le moyen de centrage s'engagera, grâce à sa forme courbée, plus ou moins dans cette ouverture, assurant, dans tous les cas, un contact avec les bords libres de celle-ci. Le centrage et optionnellement le blocage de l'adaptateur selon l'invention est alors obtenu. Une fois en appui contre les bords de l'ouverture débouchante de cette ouïe, tout mouvement relatif, selon la direction verticale définie précédemment, perpendiculaire à la paroi supérieure de la tête de l'adaptateur selon l'invention, est impossible. L'invention atteint ainsi le but qu'elle s'était fixé.

On notera que l'adaptateur peut comprendre un moyen de blocage longitudinal agencé pour verrouiller longitudinalement l'adaptateur dans la chape, ce qui permet de maintenir le contact du moyen de centrage avec les bords de l'ouverture débouchante de l'ouïe.

Selon différents modes de réalisation, le moyen de centrage de l'adaptateur selon l'invention peut être unique, c'est-à-dire porté par un seul des flancs latéraux de la tête de cet adaptateur.

Le moyen de centrage tel que décrit ci-dessus peut aussi être agencé sur chaque flanc latéral de la tête de l'adaptateur selon l'invention, pour une chape dont chaque paroi latérale comporte une ouïe du type précédemment défini.

L'adaptateur selon l'invention comporte également avantageusement, dans la région de son corps, un moyen de liaison en rotation de l'adaptateur selon l'invention avec un connecteur d'un système d'essuyage.

Selon un mode de réalisation, ce moyen de liaison en rotation est constitué d'au moins un toron cylindrique centré sur un axe de rotation sensiblement transversal et parallèle à la paroi supérieure de ce corps, et sensiblement perpendiculaire aux flancs latéraux de celui-ci, et s'étendant à partir au moins d'un flanc latéral du corps de ce même adaptateur, au sein du volume interne dudit adaptateur délimitée par la paroi supérieure et par les flancs latéraux de ce corps. Ce toron est avantageusement destiné à coopérer avec un connecteur associé à un balai d'essuyage lors de la connexion d'un tel balai avec l'adaptateur selon l'invention. Plus précisément, ce toron est destiné à être engagé dans un orifice d'accueil agencé dans un tel connecteur. Il est à noter qu'il résulte de ce qui précède que ce moyen de liaison en rotation est longitudinalement situé, sur l'adaptateur selon l'invention, entre l'épaulement et une extrémité longitudinale arrière de l'adaptateur.

Selon un mode de réalisation de l'invention, une ouverture est agencée dans le flanc latéral opposé du corps de l'adaptateur selon l'invention, face à ce toron. Ce mode de réalisation n'est toutefois pas exclusif, et tout moyen permettant d'établir une liaison en rotation entre l'adaptateur selon l'invention et un connecteur d'un balai d'essuyage, par exemple deux torons, deux ouvertures ou l'adjonction d'un arbre métallique, peut être mis en œuvre sans que cela nuise à l'invention.

L'invention couvre également un dispositif de connexion comprenant un adaptateur tel que décrit dans le présent document et un connecteur apte à être solidarisé à un balai d'essuyage, caractérisé en ce que l'adaptateur et le connecteur sont reliés par le moyen de liaison en rotation.

De manière avantageuse, le moyen de liaison en rotation de l'adaptateur avec le connecteur est un unique toron agencé à partir d'une face intérieure de l'un au moins des flancs latéraux du corps et s'étendant vers l'intérieur du volume interne.

De manière alternative ou complémentaire, le moyen de liaison en rotation de l'adaptateur avec le connecteur est un orifice ménagé dans l'un au moins des flancs latéraux du corps de l'adaptateur.

L'invention couvre enfin un système d'essuyage, notamment pour véhicule automobile, comprenant un balai d'essuyage, un bras d'entraînement et un adaptateur tel que décrit dans le présent document ou un dispositif de connexion comme évoqué ci-dessus, dans lequel l'adaptateur coopère avec une chape du bras d'entraînement, caractérisé en ce que le moyen de centrage entre dans une ouïe agencée dans une paroi latérale de la chape pour centrer l'adaptateur par rapport à la chape.

Avantageusement, l'adaptateur comprend au moins une joue qui couvre l'ouïe de la chape.

On notera qu'une forme courbée du moyen de centrage est en appui contre des bords ménagés à l'intersection entre une ouverture débouchante de l'ouïe et un bord libre de la chape.

D'autres caractéristiques et avantages de la présente invention apparaitront plus clairement à l'aide de la description qui suit et des dessins parmi lesquels :
- la figure 1 est une vue en perspective d'un bras d'entraînement assemblé avec un balai d'essuyage formant un système d'essuyage pour un véhicule automobile,
- la figure 2 est une vue de côté de l'extrémité d'une chape de bras d'entraînement avec lequel l'adaptateur selon l'invention est apte à coopérer,
- la figure 3 est une vue en perspective de l'adaptateur selon l'invention, assemblé à un connecteur,
- la figure 4 est une vue partielle en perspective d'un adaptateur selon l'invention assemblé avec un tel connecteur et avec une telle chape,
- la figure 5 est un agrandissement de la figure 4 illustrant le moyen de centrage lorsqu'il est utilisé avec une chape aux dimensions à la tolérance maximum,
- la figure 6 est un agrandissement de la figure 4 illustrant le moyen de centrage lorsqu'il est utilisé avec une chape aux dimensions à la tolérance minimum, et
- La figure 7 est une vue partielle en perspective d'une option équipant l'adaptateur selon l'invention.

Il est tout d'abord à noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par le même repère.

Par ailleurs, en référence aux orientations et directions définies précédemment, la direction longitudinale sera représentée, dans toutes les figures, par l'axe (Ox), la direction transversale sera représentée par l'axe (Oy), et la direction verticale sera représentée par l'axe (Oz). Ces différents axes définissent ensemble un repère orthonormé (Oxyz) représenté sur les différentes figures. Dans ce repère, l'orientation "avant" sera définie par le sens positif de l'axe (Ox), l'orientation "arrière" étant définie par le sens négatif de ce même axe, et les qualificatifs "haut" ou "supérieur" seront représentés par le sens positif de l'axe (Oz), les qualificatifs "bas" ou "inférieur" étant représentés par le sens négatif de ce même axe (Oz).

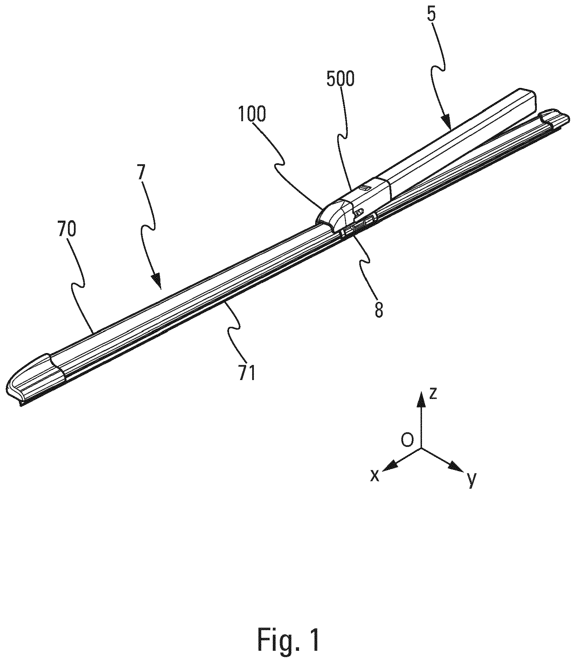

La figure 1 illustre un système d'essuyage pour véhicule automobile. Ce système comprend un bras d'entraînement 5 qui effectue un mouvement de va-et-vient angulaire contre une surface à essuyer, et un balai d'essuyage 7, lui-même constitué ici d'une vertèbre 70 porteuse d'une lame racleuse 71 réalisée dans un matériau élastique. Dans le mouvement de va-et-vient angulaire du bras d'entraînement 5, le balai d'essuyage 7 et sa lame racleuse 71 sont entraînés dans un mouvement angulaire contre la surface vitrée pour réaliser l'opération d'essuyage/nettoyage désirée. Le balai d'essuyage 7 est rattaché au bras d'entraînement 5 par un ensemble de connexion qui comprend un connecteur 8 et un adaptateur 100. Le connecteur 8 est solidarisé au balai d'essuyage 7, et l'adaptateur 100 réalise une interface entre ce connecteur 8 et une partie terminale du bras d'entraînement 5, autrement appelée chape 500. Connecteur 8 et adaptateur 100 coopèrent pour réaliser la fixation du balai 7 sur le bras d'entraînement 5 et une liaison articulée entre ces deux éléments.

L'invention a pour objet un type particulier d'adaptateur 100 apte à coopérer avec un type particulier de chape 500 de bras d'entraînement, notamment dans le but de fournir des pièces détachées pour des ensembles essuie-glace dont le bras d'entraînement présente ce type particulier de chape 500.

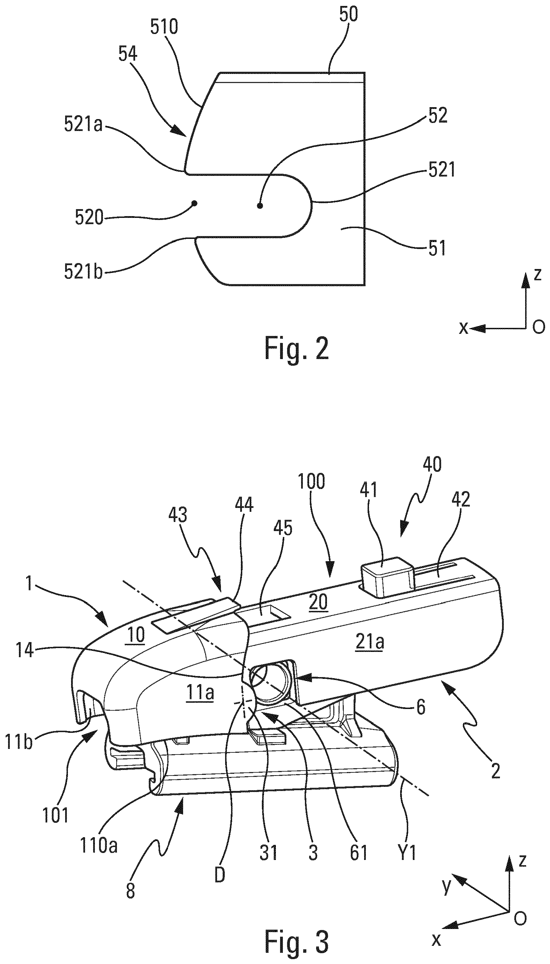

La chape 500, représentée schématiquement en vue de côté sur les figures 2 et 4 à 7, avec laquelle l'adaptateur 100 selon l'invention est destiné à coopérer, comporte une paroi supérieure 50 à partir de laquelle s'étendent, sensiblement perpendiculairement à cette paroi supérieure 50, deux parois latérales 51. La chape 500 présente ainsi au moins une section droite dont la forme est sensiblement celle d'un "U" renversé dont la base est formée par la paroi supérieure 50 et dont les branches sont formées par les parois latérales 51. Paroi supérieure 50 et parois latérales 51 de cette chape 500 délimitent ensemble un volume d'accueil 54.

La chape 500 comporte, agencée dans l'une au moins de ses parois latérales 51, une ouïe 52. Avantageusement, une ouïe 52 est agencée dans chacune des parois latérales 51 de la chape 500. La chape 500 comprend ainsi deux ouïes 52.

Chacune de ces ouïes s'étend sensiblement le long d'une direction parallèle à la paroi supérieure 50 de la chape 500, en direction du bras d'entraînement 5 dont la chape 500 constitue la partie terminale. L'ouïe 52 s'étend à partir d'un bord libre 510 de la paroi latérale 51 correspondante, extrémité libre qui constitue l'extrémité d'accueil de l'adaptateur dans un système d'essuyage comportant un tel bras d'entraînement.

Chaque ouïe 52 débouche ainsi au niveau du bord libre 510 de la paroi latérale 51 dans laquelle elle est ménagée en un orifice 520. Pour des raisons de commodité de fabrication, un fond 521 de chaque ouïe 52, au sein de la paroi latérale 51 dans laquelle cette ouïe est agencée, est avantageusement courbe : selon le mode de réalisation plus particulièrement illustré par les figures, il a sensiblement la forme d'un demi-cercle centré au sein de l'ouïe 52 correspondante.

En référence aux figures 2 à 7, l'adaptateur 100 selon l'invention comporte une tête 1 et un corps 2 qui s'étendent longitudinalement dans le prolongement l'un de l'autre selon l'axe (Ox) précédemment défini. En référence aux directions et orientations précédemment définies, la tête 1 s'étend vers l'avant de l'adaptateur 100 selon l'invention, et le corps 2 s'étend vers l'arrière de ce même adaptateur 100. Selon un mode de réalisation de l'invention, l'adaptateur 100 est réalisé par injection d'un matériau polymère dans un moule, et il est issu de matière en un seul bloc.

Comme le montrent ces figures, le corps 2 est formé d'une paroi supérieure 20, d'un premier flanc latéral et d'un deuxième flanc latéral sensiblement verticaux, respectivement référencé 21a et 21b, qui s'étendent chacun à partir d'un côté longitudinal de la paroi supérieure 20, sensiblement perpendiculairement à celle-ci. Selon le mode de réalisation illustré par les figures, la dimension longitudinale du corps 2 est supérieure à la dimension transversale de celui-ci.

La tête 1 est formée d'une paroi supérieure 10, d'un premier flanc latéral et d'un deuxième flanc latéral, respectivement référencés 11a et 11b, sensiblement verticaux et s'étendant chacun à partir d'un côté longitudinal de la paroi supérieure 10, sensiblement perpendiculairement à cette dernière.

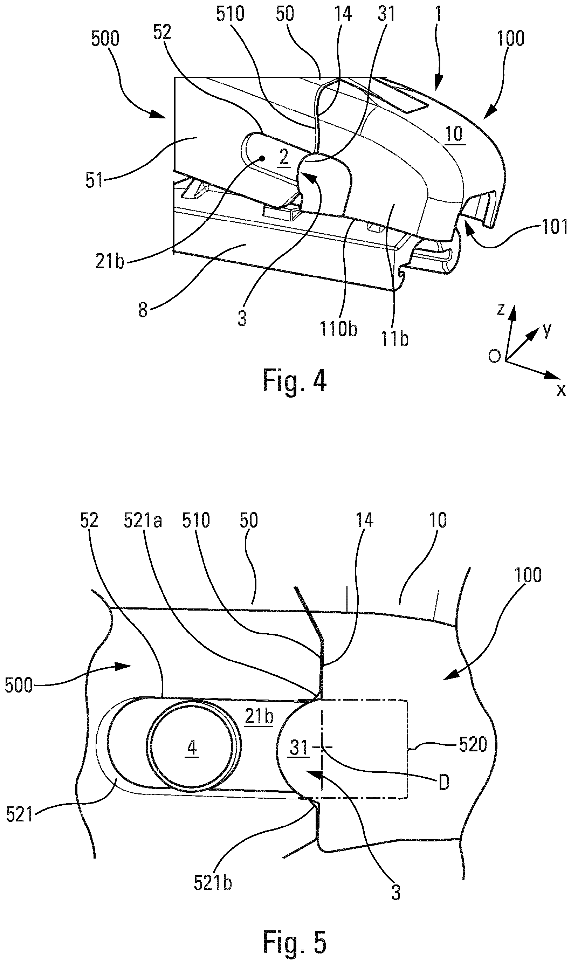

Le premier flanc latéral 11a de la tête 1 et le premier flanc latéral 21a du corps 2 sont représentés sur la figure 3 tandis que les deuxièmes flancs latéraux, respectivement 11b et 21b, de la tête 1 et du corps 2 sont visibles sur la figure 4. Tête 1 et corps 2 présentent donc chacun, selon un plan transversal vertical parallèle au plan (Oyz) du repère précédemment défini, une section droite en forme de "U" renversé dont la branche transversale est constituée des parois supérieures, respectivement 10 et 20, et dont les branches verticales sont formées par les flancs latéraux, respectivement 11a, 11b et 21a, 21b, de ces deux parties de l'adaptateur 100 selon l'invention.

Les parois supérieures, respectivement 10 et 20, de la tête 1 et du corps 2 de l'adaptateur 100 selon l'invention délimitent ainsi, avec les flancs latéraux, respectivement 11a, 11b et 21a, 21b, de cette tête et de ce corps, un volume interne 101 de cet adaptateur, schématiquement indiqué sur les figures 3 et 4.

Selon une caractéristique avantageuse d'un mode de réalisation de l'invention, une dimension transversale, c'est-à-dire la dimension selon l'axe (Oy) précédemment défini, de la tête 1 est légèrement supérieure à celle du corps 2, mesurées selon la même direction. En d'autres termes, la tête 1 forme, à son interface avec le corps 2, un épaulement 14 sensiblement parallèle au plan transversal vertical (Oyz) du repère orthonormé précédemment défini, s'étendant depuis la tête 1 et rentrant vers le corps 2. L'épaulement latéral 14 s'étend ainsi, selon ce mode de réalisation de l'invention, à toute la périphérie de l'interface entre tête 1 et corps 2 de l'adaptateur selon l'invention.

Selon un mode de réalisation de l'invention, les dimensions verticale et transversale de cet épaulement 14 sont sensiblement égales respectivement à l'épaisseur de la paroi supérieure 50 de la chape 500 et à l'épaisseur des parois latérales 51 de cette même chape 500 avec laquelle l'adaptateur 100 selon l'invention est destiné à coopérer, de telle manière que le bord avant 510 de cette chape 500, tel que visible sur la figure 4 notamment, puisse venir en appui contre cet épaulement 14. De telles caractéristiques permettent d'obtenir une tête 1 qui affleure les faces extérieures de la chape 500.

Selon l'invention, l'adaptateur 100 comporte au moins un moyen 3 permettant son centrage avec la chape 500 selon la direction de l'axe (Oz) précédemment défini, c'est-à-dire perpendiculairement à une paroi supérieure de l'adaptateur, notamment la paroi supérieure 10 de la tête 1 ou la paroi supérieure 20 du corps 2.

En référence à la figure 3, ce moyen de centrage 3 est porté par le premier flanc latéral 11a de la tête 1 de l'adaptateur 100, en ce sens qu'il prolonge la tête 1 sur le corps 2. La figure 4 illustre pour sa part un mode de réalisation dans lequel le moyen de centrage 3 est agencé sur le deuxième flanc latéral 11b de la tête 1 de l'adaptateur 100 : il va de soi que ce qui sera décrit dans ce qui suit en référence à l'agencement d'un tel moyen de centrage 3 sur le premier flanc latéral 11a de la tête 1 s'applique de manière symétrique à l'agencement d'un tel moyen de centrage sur le deuxième flanc latéral 11b de cette même tête 1.

En référence à ces figures, ce moyen de centrage 3 s'étend longitudinalement en direction du corps 2 de l'adaptateur selon l'invention, à partir du flanc latéral 11a, 11b qui le porte, et au-delà de l'épaulement latéral 14. Plus précisément, en référence à la figure 3, ce moyen de centrage 3 forme un prolongement, selon la direction longitudinale de l'axe (Ox), du premier flanc latéral 11a, prolongement qui recouvre partiellement le premier flanc latéral 21a correspondant.

Selon le mode de réalisation de l'invention plus particulièrement illustré par les figures, la dimension transversale, c'est-à-dire la dimension selon l'axe (Oy) précédemment défini, du moyen de centrage 3 est sensiblement égale à la dimension transversale de la tête 1. Ainsi, ce moyen de centrage 3 ne constitue pas, à la surface extérieure du flanc latéral 11a ou 11b qui le porte, une partie saillante selon la direction transversale.

Selon une autre caractéristique de l'invention, le moyen de centrage 3 présente une forme courbée dont le sommet de la courbure est orienté vers le corps 2 de l'adaptateur 100. La forme courbée est ici un bord arqué qui délimite le moyen de centrage 3.

Plus précisément, ce moyen de centrage 3 se présente sous la forme d'une portion de disque 31 dont le centre D est situé sur flanc latéral 11a, 11b qui le porte. Selon le mode de réalisation de l'invention plus particulièrement illustré par les figures, le centre D de cette portion de disque 31 est situé, selon l'axe (Oz) précédemment défini, le long du trajet qu'aurait l'épaulement 14 en l'absence du moyen de centrage 3. En d'autres termes, la portion de disque qui constitue ce moyen de centrage 3 est avantageusement, mais de manière non exclusive, un demi-disque dont un diamètre se situe par exemple dans le plan (Oyz) de l'épaulement 14. Avantageusement, le moyen de centrage 3 est situé, selon l'axe (Oz) précédemment défini, entre la paroi supérieure 10 de la tête 1 de l'adaptateur 100 et un bord inférieur 110a, 110b du flanc latéral 11a, 11b qui le porte, bord inférieur 110a, 110b opposés au bord par lequel ce flanc latéral est rattaché à la paroi supérieure 10.

La figure 3 illustre aussi l'existence d'un dispositif de verrouillage 40 destiné à bloquer longitudinalement l'adaptateur 100 dans la chape du bras d'entrainement. Ce dispositif de verrouillage 40 maintient en appui l'adaptateur 100 contre la chape, notamment en maintenant une butée entre l'épaulement 14 et le bord libre 510 de la chape.

Ce dispositif de verrouillage 40 se présente sous la forme générale d'un plot ou bouton 41 agencé au voisinage d'une extrémité longitudinale arrière de l'adaptateur 100 selon l'invention, opposée à la tête 1 de cet adaptateur. Ce plot 41 est ménagé au bout d'une languette flexible 42 et il est formé d'une paroi distale avantageusement sensiblement parallèle à la paroi supérieure du corps 2 de l'adaptateur selon l'invention, paroi distale à partir de laquelle s'étendent, en direction de ladite paroi supérieure 20 du corps 2 de l'adaptateur 100 selon l'invention, un ensemble de parois latérales.

Selon un mode de réalisation de l'invention, ce plot 41 a une forme sensiblement parallélépipédique, et il comporte donc quatre parois latérales qui s'étendent à partir de sa paroi distale en direction du corps 2 de l'adaptateur 100. Avantageusement, la paroi distale du plot formant le premier moyen de blocage de l'adaptateur selon l'invention s'étend à l'extérieur du volume interne 101 délimité par les parois supérieures et les flancs latéraux de la tête 1 et du corps 2 dudit adaptateur. Le moyen de verrouillage 40 est donc escamotable en pouvant tourner autour d'une charnière située entre le plot 41 et l'extrémité longitudinale arrière de l'adaptateur 100.

La figure 3 montre encore la présence d'un moyen additionnel 43 pour sécuriser la fixation de l'adaptateur 100 dans la chape. Selon un exemple de réalisation, un tel moyen additionnel 43 prend la forme d'une dent 44 fixe. Une telle dent 44 est issue de la paroi supérieure 10 de la tête 1 et s'étend selon l'axe (Ox) au-dessus de la paroi supérieure 20 du corps 2. La dent 44 et la paroi supérieure 20 sont agencées l'une en face de l'autre de sorte à enserrer la paroi supérieure 50 de la chape.

Selon un exemple de réalisation, l'adaptateur 100 comprend une lumière longitudinale 45 agencée dans la paroi supérieure 20 du corps 2 de l'adaptateur 100 selon l'invention, à partir de l'épaulement 14 et en s'étendant vers l'extrémité longitudinale arrière de l'adaptateur 100.

La figure 4 illustre plus précisément l'assemblage de l'adaptateur 100 selon l'invention avec une chape 500 du type décrit précédemment et illustré par la figure 2. Sur la figure 4, l'adaptateur 100 selon l'invention est montré assemblé avec un connecteur 8 d'un balai d'essuyage. Les moyens pour réaliser cet assemblage seront décrits plus loin.

Lors de l'assemblage de l'adaptateur 100 selon l'invention avec une chape 500 du type décrit précédemment, le corps 2 de l'adaptateur 100 est inséré dans le volume d'accueil de la chape 500. Dans ce mouvement, la paroi supérieure du corps 2 vient en appui, au sein de ce volume d'accueil, contre la paroi supérieure 50 de la chape 500, et les parois latérales 51 de celle-ci agissent à la fois comme moyen de guidage longitudinal et transversal et comme moyen de blocage transversal de l'adaptateur 100 au sein de ce volume d'accueil. Pour ce faire, les dimensions extérieures, notamment, du corps 2 de l'adaptateur 100 selon l'invention, sont avantageusement définies pour permettre ce guidage et ce blocage. En d'autres termes, les dimensions extérieures du corps 2 de l'adaptateur 100 selon l'invention sont avantageusement inférieures aux dimensions intérieures du volume d'accueil défini précédemment, pour permettre une insertion aisée mais ajustée, c'est-à-dire sans jeu excessif.

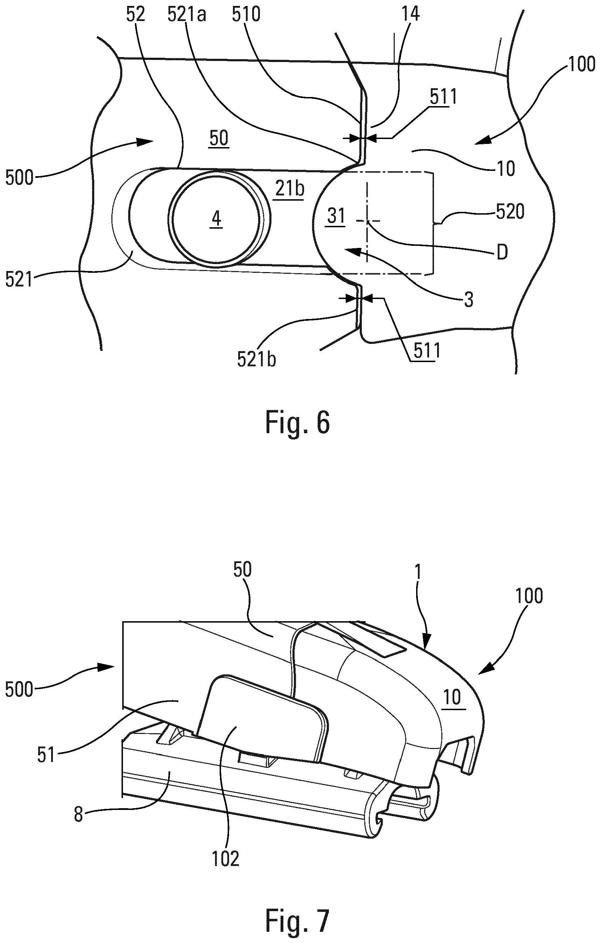

Telles qu'illustrées sur les figures 5 et 6, les dimensions du moyen de centrage 3 et sa configuration sur le flanc latéral 11a, 11b qui le porte sont définies de telle manière que, lorsque le corps 2 de l'adaptateur 100 selon l'invention est reçu dans le volume d'accueil de la chape 500, ce moyen de centrage 3 obture l'ouverture débouchante 520 de l'ouïe 52 agencée sur la paroi latérale 51 de cette chape 500. En d'autres termes, la dimension, selon l'axe (Oz) précédemment défini, du moyen de centrage 3 est avantageusement supérieure à la dimension de l'ouverture débouchante 520 de l'ouïe 52, mesurée selon ce même axe (Oz).

Plus précisément, et comme le montre plus particulièrement les figures 5 ou 6, dans l'assemblage de l'adaptateur 100 selon l'invention avec une chape 500 du type précédemment décrit et illustré par la figure 2, le moyen de centrage 3 vient se placer en appui contre les bords, respectivement 521a et 521b, de l'ouverture débouchante 520 de l'ouïe agencée sur la paroi latérale 51 correspondante de la chape 500. Il résulte alors de ce qui précède que, en fonction des dimensions et de la configurations exactes de cette ouïe 52, et, en particulier, en fonction de la tolérance de fabrication de cette ouïe 52 vue selon l'axe (Oz) définie précédemment, la forme courbée du moyen de centrage 3 orientée vers le corps 2 s'engage plus ou moins, au travers de cette ouverture débouchante 520, au sein de l'ouïe 52.

Ceci est reflété par les figures 5 et 6 qui illustrent la coopération d'un même adaptateur 100 avec deux chapes de forme identique, mais dont les dimensions, en particulier celles d'au moins une ouïe 52, sont à la tolérance maximum pour la figure 5, et à la tolérance minimum pour la figure 6.

Dans ces deux cas, le moyen de centrage 3 vient en contact avec les bords 521a et 521b de l'ouverture débouchante 520. Une fois le moyen de centrage 3 en appui contre les bords 521a, 521b, de l'ouverture débouchante 520 de cette ouïe 52, tout mouvement relatif, selon l'axe (Oz) défini précédemment, de l'adaptateur 100 par rapport à la chape 500, est interdit : l'invention permet ainsi d'assurer un centrage de l'adaptateur par rapport au bras d'entrainement. La forme courbée orientée vers le corps 2 du moyen de centrage 3, dont le sommet de la courbure se trouve alors orienté vers le fond 521 de l'ouïe 52, assure un guidage et un centrage vertical de la tête 1 de l'adaptateur 100 dans la chape 500, notamment lors de la mise en butée de l'épaulement 14 contre la paroi supérieure 50 et/ou les parois latérales 51 de la chape 500. En effet, quelles que soient la configuration et les dimensions exactes de l'ouïe 52 relativement à ses tolérances de fabrication, au moins une portion de la forme courbée du moyen de centrage 3 est en contact simultanément avec les deux bords 521a, 521b de l'ouverture débouchante 520 de l'ouïe 52.

Dans le cas de la figure 5, une portion du bord libre 510 de la chape 500 qui s'étend de part et d'autre de l'ouïe 52 vient en contact d'une portion de l'épaulement 14 qui s'étend de chaque côté du moyen de centrage 3. Il n'existe donc pas de jeu entre ces deux portions.

Dans le cas de la figure 6, le moyen de centrage 3 est moins entré dans l'ouïe 52 que dans la situation illustrée sur la figure 5. La portion du bord libre 510 de la chape 500 qui s'étend de part et d'autre de l'ouïe 52 est éloignée d'une portion de l'épaulement 14 qui s'étend de chaque côté du moyen de centrage 3. Il existe alors un jeu 511 entre ces deux portions.

Le moyen de centrage 3 tel que présenté ci-dessus peut également assurer un blocage vertical de l'adaptateur 100 dans la chape 500 du d'entraînement 5.

La figure 7 illustre un mode de réalisation de l'adaptateur 100 identique à celui illustré à la figure 4, et on se reportera à la description détaillé de celle-ci pour son exécution. De manière additionnelle, l'adaptateur 100 de la figure 7 comprend au moins une joue 102 qui présente une fonction de cache, notamment pour couvrir et cacher l'ouïe 52. L'adaptateur 100 peut comprendre une unique joue 102, mais il est également possible que l'adaptateur comprenne deux joues 102 ménagées de part et d'autre de l'adaptateur 100.

La joue 102 est par exemple issue de la tête, en étant formée de matière avec celle-ci pendant l'opération de moulage de l'adaptateur. La joue 102 s'étend longitudinalement, selon l'axe (Ox), et verticalement, selon l'axe (Oz), le long du corps 2. Autrement dit, la joue 102 est parallèle, ou sensiblement parallèle, la paroi latérale qui délimite le corps de l'adaptateur 100.

On notera que la joue 102 est également disposée transversalement à distance du corps de l'adaptateur 100. Il est ainsi ménagé un espace entre la joue 102 et le corps 2 de l'adaptateur, et cet espace est occupé par la paroi latérale 51 de la chape 500 quand l'adaptateur 100 est monté dans cette dernière.

Il est à noter que, une fois l'adaptateur 100 selon l'invention assemblé avec la chape 500 du bras d'entraînement 5, les parois supérieures, respectivement 50 et 10, de cette chape 500 et de la tête 1 de cet adaptateur, ainsi que les parois latérales 51 de cette chape et les flancs latéraux 11 de la tête 1 de cet adaptateur forment avantageusement une surface continue, contribuant ainsi à l'esthétique de l'ensemble, et supprimant également toute zone d'accumulation éventuelle de débris, salissures ou particules potentiellement nuisibles au bon fonctionnement de l'ensemble.

Pour son assemblage avec un connecteur 8 solidaire d'un balai d'essuyage 7 comme représenté par la figure 1, l'adaptateur 100 selon l'invention comporte un moyen de liaison en rotation avec le connecteur 8. Selon un exemple de ce moyen de liaison en rotation il est prévu un toron, avantageusement unique, agencé à partir d'une surface intérieure de l'un au moins des flancs latéraux 21a, 21b du corps 2 et s'étendant transversalement à l'intérieur du volume interne 101. Un tel toron est sensiblement cylindrique et centré sur un axe transversal de rotation Y1 dudit adaptateur. Avantageusement, l'axe transversal de rotation Y1 traverse le corps 2 de l'adaptateur 100 selon l'invention à proximité de l'épaulement 14.

Avantageusement, le flanc latéral 21a, 21b du corps 2 opposé à celui à partir duquel s'étend le toron sensiblement cylindrique est percé d'une fenêtre 61 sensiblement centrée sur l'axe transversal de rotation Y1. Comme le montre la figure 3, l'ouverture 61 étant agencée dans le premier flanc latéral 21a du corps 2 correspondant au premier flanc latéral 11a de la tête 1 porteur du moyen de centrage 3, les dimensions de ce moyen de centrage 3 sont avantageusement définies pour que celui-ci n'obture pas l'ouverture 61.

L'assemblage de l'adaptateur 100 selon l'invention avec un connecteur 8 solidaire d'un balai d'essuyage est alors réalisé par engagement du toron sensiblement cylindrique avec un orifice complémentaire du connecteur 8. Il est toutefois à noter que tout moyen équivalent peut être mis en œuvre sans que cela nuise à l'invention : ainsi, il est envisageable, non exhaustivement, que 2 torons sensiblement cylindriques, centrés sur ce même axe transversal de rotation Yl, soient agencés face à face au sein du volume interne 101 de l'adaptateur, pour coopérer avec un orifice traversant agencé sur le connecteur 8, ou que cette liaison soit réalisée par coopération de torons agencés sur le connecteur 8 avec un ou plusieurs orifices ménagés dans les flancs latéraux de l'adaptateur selon l'invention et centrés sur ce même axe transversal Y1. Dans ce dernier cas toutefois, les dimensions du ou des moyens de centrage 3 seront avantageusement définies pour que ceux-ci n'obturent pas de tels orifices. Enfin, un tel moyen de liaison en rotation peut être formé par des orifices ménagés à la fois dans l'adaptateur et dans le connecteur, et qu'un arbre, par exemple métallique, soit installé dans ces orifices.

L'invention permet ainsi, par des moyens simples et faciles à mettre en œuvre, de réaliser, selon la direction verticale précédemment définie, un centrage et optionnellement un blocage simple et efficace d'un adaptateur 100 avec un bras d'entraînement 5 présentant une chape 500 spécifique du type décrit précédemment. L'invention ne saurait toutefois se limiter aux moyens et configurations décrits et illustrés, et elle s'applique également à tous moyens ou configurations équivalents et à toute combinaison de tels moyens.

En particulier, selon différentes variantes de réalisation, l'adaptateur 100 selon l'invention peut comporter un seul moyen de centrage 3 tel que décrit dans le présent document, ou il peut en comporter deux, chacun agencé sur l'un des flancs latéraux 11a, 11b de sa tête 1.

Selon d'autres variantes de réalisation, un ergot transversal 4 est illustré sur les figures 5 ou 6. Un tel ergot transversal 4 peut être agencé sur le ou les flancs latéraux 21a, 21b du corps 2 de l'adaptateur 100 selon l'invention, dans le prolongement longitudinal du moyen de centrage 3 correspondant. Lors de l'assemblage de l'adaptateur 100 selon l'invention avec une chape 500 du type décrit ici, cet ergot 4 réalise un premier engagement et une première forme de guidage de cet adaptateur 100 au sein de l'ouïe 52 correspondante de la chape 500.

Après assemblage final de l'adaptateur 100 dans la chape 500, au moins un ergot transversal 4 devient passif en ce sens qu'il ne participe plus au calage suivant l'axe (Oz) de l'adaptateur 100 dans l'ouïe 52, et plus généralement dans la chape 500. Son diamètre externe est inférieur une hauteur de l'ouïe 52 mesurée selon l'axe (Oz). L'ergot 4 devient néanmoins un organe de sécurisation supplémentaire dans le cas d'un désengagement ou d'une défaillance du calage de l'adaptateur 100 dans la chape 500, suivant le même axe (Oz).

L'ergot 4 présente ici une section circulaire, mais l'invention n'est pas limitée à cette forme spécifique.

## Revendications

1. Adaptateur (100) destiné à relier un balai d'essuyage (7) à un bras d'entraînement (5) d'un système d'essuyage pour véhicule, l'adaptateur (100) comportant une tête (1) et un corps (2) qui s'étendent dans le prolongement l'un de l'autre selon une direction longitudinale (Ox) de l'adaptateur (100), l'adaptateur (100) comprenant un moyen (6, 61) de liaison en rotation avec un connecteur (8) solidaire du balai d'essuyage (7), l'adaptateur (100) étant formé au moins par une paroi supérieure (10, 20) de laquelle sont issus au moins deux flancs latéraux (11a, 11b, 21a, 21b) de sorte à délimiter un volume interne (101) dans lequel le connecteur (8) est apte à s'étendre, l'adaptateur (100) comportant au moins un moyen de centrage (3) pour le centrer selon une direction (Oz) perpendiculaire à la paroi supérieure (10, 20) par rapport au bras d'entraînement (5), le corps (2) et la tête (1) comportant chacun une paroi supérieure (10, 20) à partir de laquelle s'étendent, sensiblement perpendiculairement à cette paroi, deux flancs latéraux (11a, 11b, 21a, 21b), le moyen de centrage (3) étant porté par l'un au moins des flancs latéraux (11a, 1b) de l'adaptateur (100), le moyen de centrage (3) étant longitudinalement agencé en direction du corps (2) à partir du flanc latéral (11a, 11b) qui le porte, au-delà d'un épaulement (14) formé à l'interface de la tête (1) et du corps (2), le moyen de centrage (3) formant, au-delà de l'épaulement (14) et en direction du corps (2), un prolongement longitudinal du flanc latéral (11a, 11b) qui le porte, le moyen de centrage (3) s'étendant transversalement du flanc latéral (21a, 21b) du corps (2) adjacent au flanc latéral (11a, 11b) de la tête (1) dont il est issu, le moyen de centrage (3) présentant, selon la direction longitudinale, une forme courbée dont le sommet de la courbure est orienté vers le corps (2) de l'adaptateur (100), le moyen de centrage (3) ayant la forme d'une portion de disque, **caractérisé en ce que** le moyen de centrage (3) est un demi-disque dont le centre (D) passe par un plan contenant l'épaulement (14).

2. Adaptateur (100) selon la revendication 1, **caractérisé en ce que** chaque flanc latéral (11a, 11b) de la tête (1) porte un moyen de centrage (3).

3. Adaptateur (100) selon l'une quelconque des revendications précédentes, **caractérisé en ce qu'**il comprend au moins une joue (102) issue de la tête (1) et qui s'étend longitudinalement le long du corps (2) et transversalement à distance de ce dernier.

4. Adaptateur (100) selon l'une quelconque des revendications précédentes, **caractérisé en ce que** le moyen de centrage (3) forme un moyen de blocage de l'adaptateur (100) dans le bras d'entraînement (5) selon la direction (Oz) perpendiculaire à la paroi supérieure (10, 20) de l'adaptateur (100).

5. Dispositif de connexion comprenant un adaptateur (100) selon l'une quelconque des revendications précédentes et un connecteur (8) apte à être solidarisé à un balai d'essuyage (7), **caractérisé en ce que** l'adaptateur (100) et le connecteur (8) sont reliés par le moyen de liaison en rotation (6, 61).

6. Dispositif selon la revendication 5, **caractérisé en ce que** le moyen de liaison en rotation (6, 61) de l'adaptateur (100) avec le connecteur (8) est un unique toron (6) agencé à partir d'une face intérieure (210) de l'un au moins des flancs latéraux (21a, 21b) du corps (2) et s'étendant vers l'intérieur du volume interne (101).

7. Dispositif de connexion selon la revendication 5 ou 6, **caractérisé en ce que** le moyen de liaison en rotation (6, 61) de l'adaptateur (100) avec le connecteur (8) est un orifice (61) ménagé dans l'un au moins des flancs latéraux (21a, 21b) du corps (2) de l'adaptateur (100).

8. Système d'essuyage comprenant un balai d'essuyage (7), un bras d'entraînement (5) et un adaptateur (100) selon l'une quelconque des revendications 1 à 4 ou un dispositif de connexion selon l'une quelconque des revendications 5 à 7, dans lequel l'adaptateur (100) coopère avec une chape (500) du bras d'entraînement (5), **caractérisé en ce que** le moyen de centrage (3) entre dans une ouïe (52) agencée dans une paroi latérale (51) de la chape (500) pour centrer l'adaptateur (100) par rapport à la chape (500).

## Patentansprüche

1. Adapter (100), der dazu bestimmt ist, ein Wischerblatt (7) mit einem Antriebsarm (5) eines Wischsystems für ein Fahrzeug zu verbinden, wobei der Adapter (100) einen Kopf (1) und einen Körper (2) aufweist, die sich in gegenseitiger Verlängerung in einer longitudinalen Richtung (Ox) des Adapters (100) erstrecken, wobei der Adapter (100) ein Mittel (6, 61) für eine rotatorische Verbindung mit einem mit dem Wischerblatt (7) fest verbundenen Verbinder (8) aufweist, wobei der Adapter (100) wenigstens durch eine obere Wand (10, 20) gebildet ist, von der wenigstens zwei seitliche Flansche (11a, 11b, 21a, 21b) ausgehen, derart, dass ein Innenvolumen (101) begrenzt wird, in dem sich der Verbinder (8) erstrecken kann, wobei der Adapter (100) wenigstens ein Zentrierungsmittel (3) aufweist, um ihn in einer Richtung (Oz) senkrecht zu der oberen Wand (10, 20) in Bezug auf den Antriebsarm (5) zu zentrieren, wobei der Körper (2) und der Kopf (1) jeweils eine obere Wand (10, 20) aufweisen, von der sich zwei seitliche Flansche (11a, 11b, 21a, 21b) im Wesentlichen senkrecht zu dieser Wand erstrecken, wobei das Zentrierungsmittel (3) von wenigstens einem der seitlichen Flansche (11a, 11b) des Adapters (100) getragen wird, wobei das Zentrierungsmittel (3) ausgehend von dem seitlichen Flansch (11a, 11b), der es trägt, in Längsrichtung in Richtung des Körpers (2) über eine Schulter (14) hinaus, die durch die Grenzfläche zwischen dem Kopf (1) und dem Körper (2) gebildet ist, angeordnet ist, wobei das Zentrierungsmittel (3) jenseits der Schulter (14) und in Richtung des Körpers (2) eine longitudinale Verlängerung des seitlichen Flansche (11a, 11b), der es trägt, bildet, wobei sich das Zentrierungsmittel (3) transversal zu dem seitlichen Flansch (21a, 21b) des Körpers (2) in der Nähe des seitlichen Flansches (11a, 11b) des Kopfes (1), von dem es ausgeht, erstreckt, wobei das Zentrierungsmittel (3) in der Längsrichtung eine gekrümmte Form aufweist, wobei der Scheitel der Krümmung zu dem Körper (2) des Adapters (100) orientiert ist und wobei das Zentrierungsmittel (3) die Form eines Abschnitts einer Scheibe hat, **dadurch gekennzeichnet, dass** das Zentrierungsmittel (3) eine Halbscheibe ist, deren Zentrum (D) durch eine die Schulter (14) enthaltende Ebene verläuft.

2. Adapter (100) nach Anspruch 1, **dadurch gekennzeichnet, dass** jeder seitliche Flansch (11a, 11b) des Kopfes (1) ein Zentrierungsmittel (3) trägt.

3. Adapter (100) nach einem der vorhergehenden Ansprüche, **dadurch gekennzeichnet, dass** er wenigstens eine Wange (102) aufweist, die von dem Kopf (1) ausgeht und sich in Längsrichtung des Körpers (2) und transversal in einem Abstand von diesem Letzteren erstreckt.

4. Adapter (100) nach einem der vorhergehenden Ansprüche, **dadurch gekennzeichnet, dass** das Zentrierungsmittel (3) ein Mittel zum Blockieren des Adapters (100) in dem Antriebsarm (5) in der Richtung (Oz) senkrecht zu der oberen Wand (10, 20) des Adapters (100) bildet.

5. Verbindungvorrichtung, die einen Adapter (100) nach einem der vorhergehenden Ansprüche und einen Verbinder (8), der an einem Wischerblatt (7) befestigt werden kann, umfasst, **dadurch gekennzeichnet, dass** der Adapter (100) und der Verbinder (8) durch das Mittel (6, 61) für rotatorische Verbindung verbunden sind.

6. Vorrichtung nach Anspruch 5, **dadurch gekennzeichnet, dass** das Mittel (6, 61) für die rotatorische Verbindung des Adapters (100) mit dem Verbinder (8) eine einzige Litze (6) ist, die ausgehend von einer Innenfläche (210) wenigstens eines der seitlichen Flansche (21a, 21b) des Körpers (2) angeordnet ist und sich in das Innenvolumen (101) hinein erstreckt.

7. Verbindungsvorrichtung nach Anspruch 5 oder 6, **dadurch gekennzeichnet, dass** das Mittel (6, 61) für die rotatorische Verbindung des Adapters (100) mit dem Verbinder (8) eine Öffnung (61) ist, die in wenigstens einem der seitlichen Flansche (21a, 21b) des Körpers (2) des Adapters (100) ausgespart ist.

8. Wischsystem, das einen Wischerblatt (7), einen Antriebsarm (5) und einen Adapter (100) nach einem der Ansprüche 1 bis 4 oder eine Verbindungsvorrichtung nach einem der Ansprüche 5 bis 7 umfasst, wobei der Adapter (100) mit einer Abdeckung (500) des Antriebsarms (5) zusammenwirkt, **dadurch gekennzeichnet, dass** das Zentrierungsmittel (3) in ein Loch (52) eindringt, das in einer Seitenwand (51) der Abdeckung (500) ausgebildet ist, um den Adapter (100) in Bezug auf die Abdeckung (500) zu zentrieren.

## Claims

1. An adapter (100) designed to connect a wiper blade (7) to a drive arm (5) of a vehicle wiper system, the adapter (100) comprising a head (1) and a body (2) arranged in succession in a longitudinal direction (Ox) of the adapter (100), the adapter (100) comprising rotational linking means (6, 61) for connection to a connector (8) rigidly connected to the wiper (7), the adapter (100) having at least one top wall (10, 20) from which at least two lateral flanks (11a, 11b, 21a, 21b) extend to delimit an internal volume (101) into which the connector (8) can extend, the adapter (100) compriseing at least one centering means (3) for centering same in a direction perpendicular (Oz) to the top wall (10, 20) with respect to the drive arm (5), the body (2) and the head (1) comprising each a top wall (10, 20) from which two lateral flanks (11a, 11b, 21a, 21b) extend perpendicular to said wall (10, 20), the centering means (3) being carried by at least one of the lateral flanks (11a, 11b) of the adapter (100), the centering means (3) being arranged longitudinally towards the body (2) from the lateral flank (11a, 11b) carrying said centering means, beyond a shoulder (14) formed at the interface of the head (1) and the body (2), the centering means (3) forming, beyond the shoulder (14) and towards the body (2), a longitudinal extension of the lateral flank (11a, 11b) carrying said centering means, the centering means (3) extending transversely from the lateral flank (21a, 21b) of the body (2) adjacent to the lateral flank (11a, 11b) of the head (1) from which same emerges, the centering means (3) having a curved shape in the longitudinal direction, in which the apex of the curve is oriented towards the body (2) of the adapter (100), centering means (3) having the shape of a disk portion, **characterized in that** the centering means (3) are a half-disk, the center (D) of which passes through a plane containing the shoulder (14) .

2. The adapter (100) as claimed in claim 1, **characterized in that** each lateral flank (11a, 11b) of the head (1) carries one centering means (3).

3. The adapter (100) as claimed in any one of the preceding claims, **characterized in that** it includes at least one cheek (102) emerging from the head (1) and extending longitudinally along the body (2) and transversely at a distance from said body.

4. The adapter (100) as claimed in any one of the preceding claims, **characterized in that** the centering means (3) form means for blocking the adapter (100) in the drive arm (5) in the direction (Oz) perpendicular to the top wall (10, 20) of the adapter (100).

5. A connection device including an adapter (100) as claimed in any one of the preceding claims and a connector (8) designed to be rigidly connected to a wiper blade (7), **characterized in that** the adapter (100) and the connector (8) are linked by rotational linking means (6, 61) .

6. The device as claimed in claim 5, **characterized in that** the rotational linking means (6, 61) between the adapter (100) and the connector (8) is a single trunnion (6) arranged from an inner face (210) of at least one of the lateral flanks (21a, 21b) of the body (2) extending towards the inside of the internal volume (101).

7. The connection device as claimed in claim 5 or 6, **characterized in that** the rotational linking means (6, 61) between the adapter (100) and the connector (8) is an orifice (61) formed in at least one of the lateral flanks (21a, 21b) of the body (2) of the adapter (100).

8. A wiper system including a wiper blade (7), a drive arm (5) and an adapter (100) as claimed in any one of claims 1 to 4 or a connection device according to any one of claims 5 to 7, in which the adapter (100) cooperates with a clevis (500) of the drive arm (5), **characterized in that** the centering means (3) enter a port (52) arranged in a side wall (51) of the clevis (500) to center the adapter (100) in relation to the clevis (500).
